# EUROPEAN PATENT APPLICATION

(11) **EP 4 693 551 A2**
(43) Date of publication of application: **11.02.2026**
(21) Application number: 25177756.1
(22) Date of filing: 20.05.2025
(51) Int. Cl.: H01M 10/052, H01M 50/15, H01M 50/148, H01M 50/174, H01M 50/543, H01M 50/593, H01M 50/533, H01M 50/536, H01M 50/55

(54) **SUB PLATE ASSEMBLY AND SECONDARY BATTERY INCLUDING THE SAME**

(30) Priority: 05.08.2024 KR 20240103867
(71) Applicant: SAMSUNG SDI CO., LTD., Yongin-si, Gyeonggi-do 17084 (KR)
(72) Inventor: LEE, Changmu, 17084 Yongin-si (KR)
(74) Representative: Marks & Clerk LLP

(57) **Abstract**

A secondary battery includes an electrode assembly, a case in which the electrode assembly is accommodated, the case having one opening, a sub plate assembly that includes a sub plate coupled to the electrode assembly and a current collector coupled to the sub plate, and a cap assembly that is connected to the sub plate assembly and is coupled to the one opening of the case. The current collector includes a lower current collector and an upper current collector protruding above the lower current collector, and the upper current collector penetrates the sub plate to couple the current collector and the sub plate.

## Description

### BACKGROUND

### 1. Field

The present disclosure relates to a sub plate assembly and a secondary battery including the same.

### 2. Description Of The Related Art

In general, chemical batteries are batteries that include a pair of electrodes of an anode plate and a cathode plate, and an electrolyte. The amount of energy that may be stored varies depending on the materials forming the electrodes and the electrolyte. Among these batteries, secondary batteries are batteries that may be repeatedly charged and discharged, and have characteristics of a high energy density, a long lifespan, a low self-discharge rate, and being environmentally friendly. Due to these advantages, the secondary batteries are manufactured in various sizes and structures and are used as power supplies for small electronic devices such as smartphones and laptop computers, power supplies for driving motors in electric vehicles (EVs) and hybrid vehicles (HEVs), and power sources for energy storage systems (ESSs).

The secondary batteries may be classified into cylindrical secondary batteries, prismatic secondary batteries, or pouch-type secondary batteries depending on a shape of a case. An electrode assembly is inserted into a case, and a cap assembly, including a cap plate, is welded to seal the case. When such a cell superstructure of the battery is simplified as much as possible, manufacturing cost and cell resistance (and thus heat generation of the battery) is reduced.

However, excessive simplification of the cell superstructure may deteriorate functions of the battery, such as structural strength and electrical performance, and may reduce compatibility of the battery for various applications and various products.

The above information disclosed in this Background section is for enhancement of understanding of the background of the present disclosure, and therefore, it may contain information that does not constitute related (or prior) art.

### SUMMARY

The present disclosure relates to a sub plate assembly and a secondary battery including the same, and more particularly, to a sub plate assembly having a more simplified structure and a secondary battery including the same.

The present disclosure provides a sub plate assembly and a secondary battery including the sub plate assembly that is configured to increase cell capacity while maintaining the functions and compatibility of the battery.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

According to some embodiments of the present disclosure, a secondary battery includes an electrode assembly, a case in which the electrode assembly is accommodated, the case having one opening, a sub plate assembly that includes a sub plate connected to the electrode assembly and a current collector coupled to the sub plate, and a cap assembly that is connected to the sub plate assembly and is coupled to the one opening of the case. The current collector includes a lower current collector and an upper current collector protruding above the lower current collector, and the upper current collector penetrates the sub plate to couple the current collector and the sub plate.

According to some embodiments of the present disclosure, the sub plate may include a body portion, extension portions extending from both sides of the body portion, and bent portions connecting the body portion and the extension portions. The body portion and the extension portions may have a step, and a lower surface of the body portion of the sub plate may contact an upper surface of the lower current collector.

According to some embodiments of the present disclosure, the cap assembly may include a cap plate coupled to the one opening of the case, an insulator on a lower surface of the cap plate, a terminal plate coupled to an upper surface of the cap plate, and a sealing member between the cap plate and the terminal plate. The terminal plate may be connected to the upper current collector.

According to some embodiments of the present disclosure, a hole may be in the body portion of the sub plate, and the upper current collector may extend through the hole.

According to some embodiments of the present disclosure, the sub plate may further include a pair of first coupling portions on opposing sides of the body portion, the lower current collector may further include a pair of second coupling portions at positions corresponding to the first coupling portions, and the pair of second coupling portions of the lower current collector may extend into the pair of first coupling portions of the sub plate to couple the sub plate and the lower current collector.

According to some embodiments of the present disclosure, the hole may be between the pair of first coupling portions in the body portion of the sub plate.

According to some embodiments of the present disclosure, a thickness of the lower current collector may be smaller than, equal to or substantially equal to a height of the step between the body portion and the extension portion of the sub plate.

According to some embodiments of the present disclosure, welding beads may be on a lower surface of the lower current collector.

According to some embodiments of the present disclosure, the welding beads may be at positions corresponding to a circumference of the upper current collector.

According to some embodiments of the present disclosure, the welding beads may be at positions corresponding to the second coupling portions formed at the lower current collector.

According to some embodiments of the present disclosure, a sub plate assembly includes a sub plate that is connected to an electrode assembly; and a current collector that is coupled to the sub plate. The current collector includes a lower current collector and an upper current collector protruding above the lower current collector, and the upper current collector penetrates the sub plate to couple the current collector and the sub plate. The current collector may be connected to a terminal plate.

According to some embodiments of the present disclosure, the sub plate may include a body portion, extension portions extending from both sides of the body portion, and bent portions connecting the body portion and the extension portions. The body portion and the extension portions may have a step, and a lower surface of the body portion of the sub plate may come into contact with an upper surface of the lower current collector.

According to some embodiments of the present disclosure, the sub plate assembly may be connected to a cap assembly that includes a cap plate coupled to one opening of a case in which the electrode assembly is accommodated, an insulator on a lower surface of the cap plate, a terminal plate coupled to an upper surface of the cap plate, and a sealing member between the cap plate and the terminal plate. The terminal plate may be connected to the upper current collector.

According to some embodiments of the present disclosure, a hole may be in the body portion of the sub plate, and the upper current collector may penetrate the hole.

According to some embodiments of the present disclosure, the sub plate may further include a pair of first coupling portions on opposing sides of the body portion, the lower current collector may further include a pair of second coupling portions at positions corresponding to the first coupling portions, and the pair of second coupling portions of the lower current collector may extend into the pair of first coupling portions of the sub plate to couple the sub plate and the lower current collector.

According to some embodiments of the present disclosure, the hole may be between the pair of first coupling portions in the body portion of the sub plate.

According to some embodiments of the present disclosure, a thickness of the lower current collector may be smaller than or substantially equal to a height of the step between the body portion and the extension portions of the sub plate.

According to some embodiments of the present disclosure, welding beads may be on a lower surface of the lower current collector.

According to some embodiments of the present disclosure, the welding beads may be at positions corresponding to a circumference of the upper current collector.

According to some embodiments of the present disclosure, the welding beads may be at positions corresponding to the second coupling portions on the lower current collector.

According to some embodiments of the present disclosure, the current collector is coupled to penetrate the sub plate, and thus the overall thickness of the cell upper structure can be reduced. Accordingly, an energy capacity increase and a cost reduction of the secondary battery can be achieved.

According to some embodiments of the present disclosure, compared to the process of welding the sub plate after positioning the sub plate against the current collector in the related art, the number of welding operations can be reduced due to the increased fixing strength caused by the coupling of the current collector and the sub plate.

According to some embodiments of the present disclosure, the manufacturing process can be simplified, the high structural stability can be achieved even with a small number of welding operations, and the manufacturing cost can be reduced.

According to some embodiments of the present disclosure, even though the overall thickness of the cell upper structure is reduced compared to the thickness of the cell upper structure in the related art, sufficient thickness for welding can be achieved due to the structure in which the current collector and the sub plate are coupled together.

According to some embodiments of the present disclosure, stable welding can be performed even without necessarily inserting a device such as a welding jig.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
Fig. 1 is a perspective view schematically illustrating a secondary battery according to some embodiments of the present disclosure.
Fig. 2 is a sectional view of a secondary battery according to some embodiments of the present disclosure.
Fig. 3 is a sectional view schematically illustrating a sub plate assembly and a cap assembly according to some embodiments of the present disclosure.
Fig. 4A is an exploded perspective view illustrating a sub plate and a current collector according to a first embodiment of the present disclosure in detail.
Fig. 4B is an exploded perspective view illustrating a sub plate and a current collector according to a second embodiment of the present disclosure in detail.
Fig. 4C is an exploded perspective view illustrating a sub plate and a current collector according to a third embodiment of the present disclosure in detail.
Fig. 4D is an exploded perspective view illustrating a sub plate and a current collector according to a fourth embodiment of the present disclosure in detail.
Fig. 5 is an enlarged view illustrating in detail the sub plate assembly formed by coupling the sub plate and the current collector illustrated in Fig. 4A.
Fig. 6 is a sectional view schematically illustrating the sub plate assembly according to some embodiments of the present disclosure.
Fig. 7 is a flowchart illustrating a sequence of a method for manufacturing a secondary battery according to some embodiments of the present disclosure.
Fig. 8 is a sectional view schematically illustrating a procedure of welding the sub plate assembly according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will be understood that when a component is referred to as being "linked," "coupled," or "connected" to another component, the elements may be directly "coupled," "linked" or "connected" to each other, or another component may be "interposed" between the components".

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, layers and regions illustrated in the drawings may be exaggerated in size and relative size for the clarity of the description. For example, the sizes illustrated in the drawings are merely for the sake of convenience of understanding and are not limited thereto. Throughout the specification, the same reference sign denotes the same component.

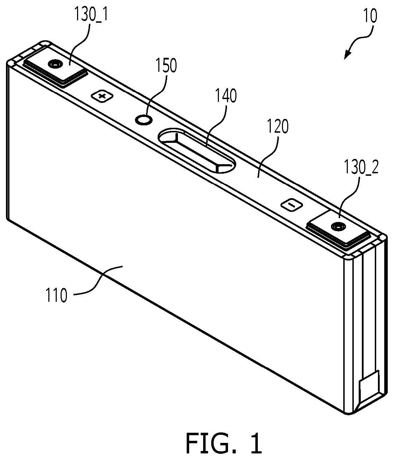

Fig. 1 is a perspective view schematically illustrating a secondary battery 10 according to some embodiments of the present disclosure. Referring to Fig. 1, a secondary battery 10 may include at least one or more electrode assemblies manufactured by winding or stacking with a separator, which is an insulator, interposed between an anode and a cathode, a case 110 in which the electrode assembly is accommodated, and a cap plate 120 coupled to one opening of the case 110. However, the present disclosure is not limited thereto, and the electrode assembly may be formed in a structure in which a plurality of sheets of anodes and cathodes are alternately stacked with the separator interposed therebetween.

The case 110 forms an overall appearance of the secondary battery 10 and may be made of a conductive metal such as aluminum, an aluminum alloy, or nickel-plated steel. The case 110 may provide a space where the electrode assembly is accommodated. Fig. 1 depicts an embodiment in which the case 110 is a square case and the secondary battery 10 is a square secondary battery, but the scope of the present disclosure is not limited thereto. The secondary battery 10 may be a secondary battery having any shape, such as a square shape, a cylindrical shape, or a pouch shape.

The cap plate 120 may be coupled to one opening of the case 110 to seal the case 110. The case 110 and cap plate 120 may be made of a conductive material. In some embodiments, an upper end of the case 110 may be open, and the cap plate 120 may seal the open upper end of the case 110. A positive terminal 130_1 electrically connected to the anode and a negative terminal 130_2 electrically connected to the cathode may be coupled to the cap plate 120. In one or more embodiments, the positive terminal 130_1 and the negative terminal 130_2 may protrude outwardly through the cap plate 120.

In one or more embodiments, both ends (e.g., upper and lower ends) of the case 110 of the secondary battery 10 may be opened, and a plurality of cap plates 120 may seal both open ends of the case 110. In some embodiments, the positive terminal 130_1 electrically connected to the anode and the negative terminal 130_2 electrically connected to the cathode may be coupled to the cap plate 120. Such a structure of the secondary battery 10 may have a side terminal structure in which terminals are on both side surfaces of the secondary battery 10.

In some embodiments, a vent portion 140 may be on at least one surface of the secondary battery 10. In one or more embodiments, the vent portion 140 may be on an upper end of the secondary battery 10 in Fig. 1, for example, a surface where the cap plate 120 seals the case 110. The vent portion 140 may be configured to be opened in response to an internal pressure in the secondary battery 10 being higher than a predetermined threshold pressure. In Fig. 1, one vent portion 140 is in a center (or substantially a center) of one surface of the case 110, but the present disclosure is not limited thereto. In other embodiments, any number of vent portions 140 may be at any position(s) on one surface of the case 110. For example, two or more vent portions 140 may be in one surface of the case 110.

In some embodiments, the cap plate 120 may include an electrolyte inlet 150. In one or more embodiments, the electrolyte inlet 150 may be a hole in the cap plate 120 and may be configured to receive an injection of an electrolyte into the case 110 after the cap plate 120 is sealed by being coupled to an opening of the case 110.

The secondary battery 10 may be a lithium-ion secondary battery, a sodium secondary battery, or the like. However, the scope of the present disclosure is not limited thereto, and the secondary battery 10 may by any type of battery that may repeatedly provide electricity through charge and discharge operations. In some embodiments in which the secondary battery 10 is the lithium-ion secondary battery, the secondary battery 10 may be used in electric vehicles (EVs) because of excellent lifespan and high-rate characteristics. For example, the lithium-ion secondary battery may also be used for hybrid vehicles such as plug-in hybrid electric vehicles (PHEVs). The lithium-ion secondary battery may be used in fields requiring large amounts of power storage. For example, the lithium-ion secondary battery may be used for electric bikes, electric tools, and the like.

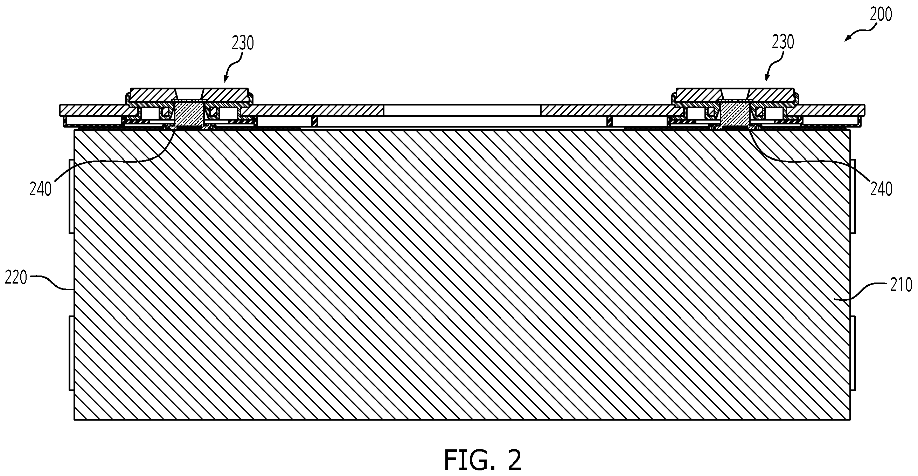

Fig. 2 is a sectional view of a secondary battery 200 according to some embodiments of the present disclosure. Referring to Fig. 2, in some embodiments, an electrode assembly 210 of a secondary battery 200 may be manufactured by winding or stacking the separator, which is the insulator, between the anode and the cathode. In other embodiments of the present disclosure, the electrode assembly 210 may be formed by a structure in which a plurality of sheets of anodes and cathodes are alternately stacked with the separator interposed therebetween. The shape of the electrode assembly 210 and the number of electrode assemblies 210 is not limited in the present disclosure.

A case 220 of the secondary battery 200 may provide a space where the electrode assembly 210 is accommodated. The case 220 may have any shape, such as a square shape, a cylindrical shape, or a pouch shape. The electrode assembly 210 of the secondary battery 200 may be accommodated in the case 220 by being inserted into the case 220.

A cap assembly 230 may include either a positive terminal electrically connected to the anode or a negative terminal electrically connected to the cathode, and may include the cap plate 120 illustrated in Fig. 1. The cap assembly 230 may be coupled to one side of the case 220 to seal the case 220. The cap assembly 230 may include electrode terminals that connect to electrode assemblies of various structures.

A sub plate assembly 240 may be coupled to a lower end of the cap assembly 230. The sub plate assembly 240 may be coupled to one side (e.g., an upper side) of the electrode assembly 210, and may be electrically connected to an electrode plate (e.g., an anode or cathode plate) of the electrode assembly 210. As will be described in detail below, the sub plate assembly 240 may include a sub plate and a current collector. A lower surface of the sub plate may contact the electrode assembly 210, and thus the electrode assembly 210 may be electrically connected to the positive terminal or the negative terminal included in the cap assembly 230.

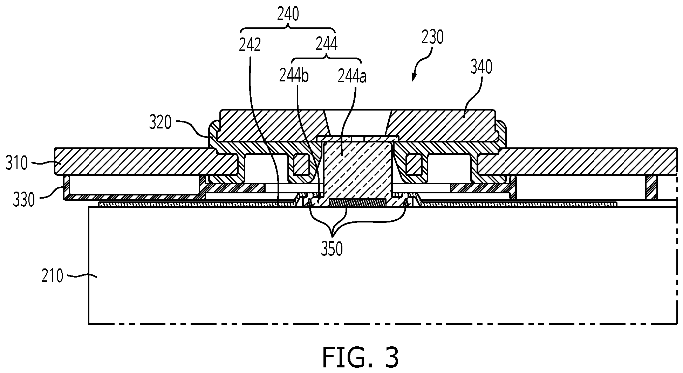

Fig. 3 is a sectional view schematically illustrating a sub plate assembly and a cap assembly according to some embodiments of the present disclosure. Referring to Fig. 3, the sub plate assembly 240 and the cap assembly 230 may be coupled to each other.

The cap assembly 230 may include a cap plate 310 coupled to one opening of the case 110 or 220 (shown in Fig. 1 and Fig. 2, respectively), an insulator 330 on a lower surface of the cap plate 310, a terminal plate 340 coupled to an upper surface of the cap plate 310, and a sealing member 320 between the cap plate 310 and the terminal plate 340.

The cap assembly 230 may be electrically connected to either the anode or the cathode of the electrode assembly 210. The cap plate 310 may be coupled to the case 110 or 220 to cover one opening of the case and may seal the case. The cap plate 310 may be welded to the case 110 or 220.

The insulator 330 may be between the lower surface of the cap plate 310 and a sub plate 242. The insulator 330 may be configured to prevent the sub plate 242 and the cap plate 310 from contacting each other. The terminal plate 340 may be coupled to the upper surface of the cap plate 310 and may be a terminal of the anode or the cathode of the secondary battery. In one or more embodiments, a busbar may be welded on the terminal plate 340, and thus a plurality of secondary batteries may be electrically connected together.

The terminal plate 340 may be coupled to the upper surface of the cap plate 310. The sealing member 320 may seal between the terminal plate 340 and the cap plate 310. The sealing member 320 may include an insulating material, and the cap plate 310 and the terminal plate 340 may be insulated by the sealing member 320.

The sub plate assembly 240 may include the sub plate 242 and a current collector 244.

The sub plate 242 may be connected to one side (e.g., the upper side) of the electrode assembly 210. The sub plate 242 may be coupled to one side of the electrode assembly 210 and may be electrically connected to an electrode plate (e.g., an anode plate or a cathode plate) of the electrode assembly 210.

The current collector 244 may include a lower current collector 244b and an upper current collector 244a protruding above the lower current collector 244b. In some embodiments, the sub plate 242 and the current collector 244 may be made of a conductive metal material such as copper, aluminum, or a copper alloy.

In some embodiments, the current collector 244 may be coupled to the sub plate 242 and the upper current collector 244a may penetrate the sub plate 242. The current collector 244 and the sub plate 242 may be coupled together by welding or the like. The terminal plate 340 may be connected to the upper current collector 244a. For example, the terminal plate 340 and the upper current collector 244a may be connected by welding or the like.

Compared to a process of forming a sub plate assembly by welding a sub plate after providing the sub plate against a lower surface of a current collector in the related art, according to some embodiments of the present disclosure, the current collector 244 and the sub plate 242 are coupled to each other such that the current collector 244 penetrates the sub plate 242. Accordingly, fixing strength is increased, and thus high structural stability can be secured. The number of welding operations required for coupling is also reduced, and thus a manufacturing process and manufacturing cost can be reduced. Additionally, an overall thickness of a cell upper superstructure can be reduced, and thus an additional capacity increase in the secondary battery can be achieved.

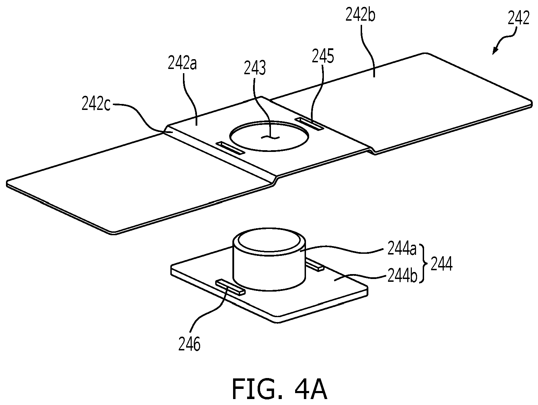

Figs. 4A to 4D are exploded perspective views illustrating sub plates 242 and current collectors 244 according to various embodiments of the present disclosure in detail.

In some embodiments, the sub plate 242 may include a body portion 242a, extension portions 242b extending in opposite directions from both sides of the body portion 242a, and bent portions 242c connecting the body portion 242a and the extension portions 242b together. In some embodiments, the body portion 242a and the extension portion 242b may have a step at the bent portion 242c. In some embodiments, a lower surface of the body portion 242a of the sub plate 242 may contact an upper surface of the lower current collector 244b.

In some embodiments, a hole 243 may be in the body portion 242a of the sub plate 242. A shape of the hole 243 may have, for example, a circular shape, but the shape of the hole 243 is not limited thereto, and the hole 243 may be formed in various shapes. For example, the hole 243 may have various shapes such as a square or a rectangle. In one or more embodiments, the hole 243 is located at a center (or substantially a center) of the body portion 242a, but the present disclosure is not limited thereto. The upper current collector 244a may penetrate the hole 243 of the body portion 242a, and thus the current collector 244 and the sub plate 242 may be coupled together. In some embodiments, a shape of the upper current collector 244a may correspond (or substantially correspond) to the shape of the hole 243.

Now, referring to Fig. 4A, the sub plate 242 may include a pair of first coupling portions 245 on opposing sides on the body portion 242a and on opposite sides of the hole 243. The pair of first coupling portions 245 may be at any position facing each other on the body portion 242a. The first coupling portions 245 may be formed in a square shape on the body portion 242a, but the shape and size of the first coupling portions 245 are not limited thereto. The hole 243 may be between the pair of first coupling portions 245. The lower current collector 244b may include a pair of second coupling portions 246 at positions corresponding to the pair of first coupling portions 245 in the body portion 242a. The first coupling portions 245 may each be a through-hole penetrating the body portion 242a. In other embodiments, the first coupling portions 245 may each be a groove having a predetermined depth on the lower surface of the body portion 242a.

In some embodiments, in addition to the upper current collector 244a penetrating the hole 243 of the body portion 242a, the pair of second coupling portions 246 of the lower current collector 244b extends into the pair of first coupling portions 245, and thus the sub plate 242 and the current collector 244 may be more stably coupled to each other. In some embodiments, the sub plate 242 and the current collector 244 may be joined together and then welded. For example, in one or more embodiments, the sub plate 242 and the current collector 244 may be welded together through laser welding or the like.

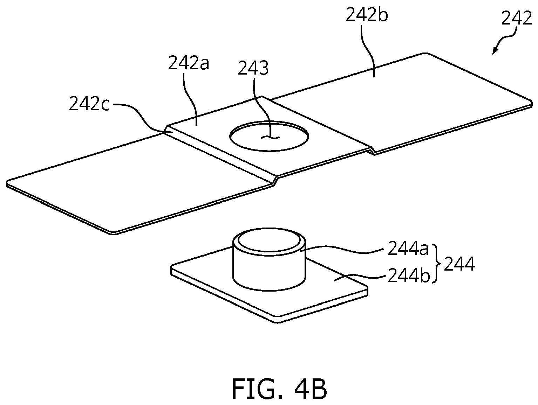

Referring to the embodiment illustrated in Fig. 4B, only the hole 243 may be in the body portion 242a of the sub plate 242 and the body portion 242a may be provided without the first coupling portions 245 shown in FIG. 4A. In some embodiments, the upper current collector 244a may penetrate the hole 243 of the body portion 242a, and thus the current collector 244 may be coupled to the sub plate 242.

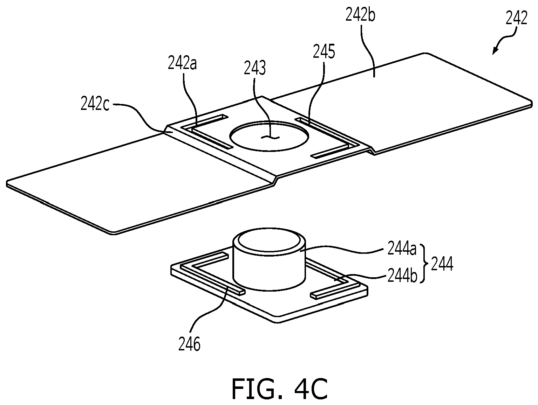

Referring to Fig. 4C, the sub plate 242 may include the pair of first coupling portions 245 at opposing corner portions on the body portion 242a. The hole 243 may be between the pair of first coupling portions 245.

In some embodiments, the pair of first coupling portions 245 may be formed in a hook (or L-) shape of the body portion 242a. In one or more embodiments, only one first coupling portion 245 may be in the corner portion of the body portion 242a in an embodiment in which the first coupling portion 245 has an L-shape.

The lower current collector 244b may include the pair of second coupling portions 246 having a corresponding shape (e.g., an L-shape) at a position corresponding to the pair of first coupling portions 245 in the body portion 242a. The second coupling portions 246 may be on the upper surface of the lower current collector 244b, and may have a shape protruding upward. In some embodiments, in addition to the upper current collector 244a penetrating the hole 243 of the body portion 242a, the pair of second coupling portions 246 of the lower current collector 244b extends into the pair of first coupling portions 245, and thus the sub plate 242 and the current collector 244 may be more stably coupled together. In some embodiments, the sub plate 242 and the current collector 244 may be joined and then welded together. For example, the sub plate 242 and the current collector 244 may be welded together through laser welding or the like.

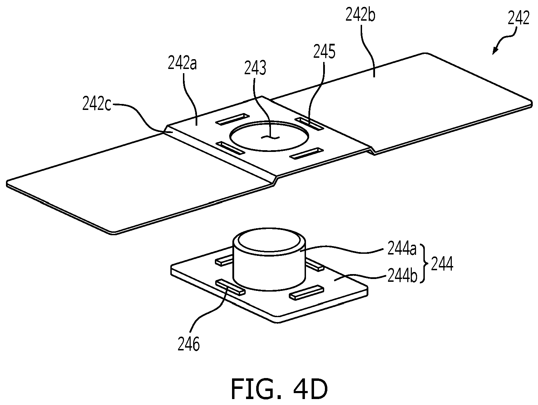

Referring to Fig. 4D, the sub plate 242 may include three or more first coupling portions 245. The first coupling portions 245 may be at any positions on the body portion 242a. The hole 243 may be between two or more of the first coupling portions 245. In one or more embodiments, the first coupling portions 245 may be four rectangular grooves or openings arranged substantially equidistantly around the hole 243. In some embodiments, the lower current collector 244b may include the second coupling portions 246 having corresponding shapes and at corresponding positions to the first coupling portions 245 formed in the body portion 242a. In some embodiments, in addition to the upper current collector 244a penetrating the hole 243 of the body portion 242a, the second coupling portions 246 of the lower current collector 244b extend into the first coupling portions 245, and thus the sub plate 242 and the current collector 244 may be more stably coupled together. In some embodiments, the sub plate 242 and the current collector 244 may be joined and then welded together. For example, the sub plate 242 and the current collector 244 may be welded together through laser welding or the like.

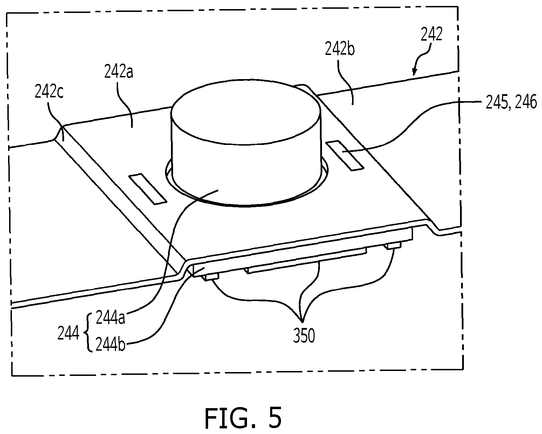

Fig. 5 is an enlarged view illustrating in detail the sub plate assembly formed by coupling the sub plate 242 to the current collector 244 illustrated in Fig. 4A. Fig. 5 is an enlarged view of only the sub plate 242 on which the pair of first coupling portions 245 disclosed in Fig. 4A are formed and the current collector 244 on which the second coupling portions 246 are formed, but the description related to Fig. 5 may be applied to all of the embodiments illustrated in Figs. 4A to 4D.

As illustrated in Fig. 5, in addition to the upper current collector 244a penetrating the hole 243 of the body portion 242a, the pair of second coupling portions 246 of the lower current collector 244b extend into the pair of first coupling portions 245, and thus the sub plate 242 and the current collector 244 may be more stably coupled together. The first coupling portions 245 and the second coupling portions 246 may be configured as in any of the embodiments illustrated in Figs. 4A, 4C, and 4D. In other embodiments, the first coupling portions 245 and the second coupling portions 246 may not be present in the current collector 244.

In some embodiments, the sub plate 242 and the current collector 244 may be coupled to each other and then welding beads 350 may be formed by a welding process to weld the sub plate 242 and the current collector 244 together. For example, the sub plate 242 and the current collector 244 may be welded together through laser welding or the like. In some embodiments, the weld beads 350 may be formed on the lower surface of the lower current collector 244b. In some embodiments, the welding beads 350 may be formed on the lower surface of the lower current collector 244b, and the welding beads 350 may be formed at positions corresponding to a circumference of the upper current collector 244a. In some embodiments, the welding beads 350 may be formed on the lower surface of the lower current collector 244b at positions corresponding to the second coupling portions 246 on the lower current collector 244b. In the embodiment in which the sub plate 242 and the lower current collector 244b are coupled together and the welding beads 350 are formed on the lower surface of the lower current collector 244b, a sufficient welding thickness may be achieved.

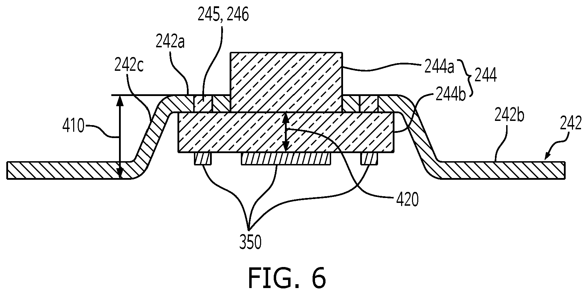

Fig. 6 is a sectional view schematically illustrating the sub plate assembly according to some embodiments of the present disclosure. Referring to Fig. 6, in addition to the upper current collector 244a penetrating the hole 243 of the body portion 242a, the second coupling portions 246 of the lower current collector 244b extend into the first coupling portions 245. Accordingly, the sub plate 242 and the lower current collector 244b may be coupled to couple the sub plate 242 and the current collector 244.

As described above, the body portion 242a and the extension portion 242b of the sub plate 242 may have a step 410 at the bent portion 242c. In some embodiments of the present disclosure, a thickness 420 of the lower current collector 244b may be smaller than or equal to a height of the step 410 between the body portion 242a and the extension portion 244b of the sub plate 242. In one or more embodiments, the thickness 420 of the lower current collector 244b may be approximately 1 mm, but the thickness 420 of the lower current collector 244b is not limited thereto, and the lower current collector 244b may have various thicknesses depending on the configuration in which the cap assembly 230 and the sub plate assembly 240 are coupled together.

According to some embodiments, the lower current collector 244b may be accommodated in a space formed by the step 410 of the sub plate 242, and thus a height of the sub plate assembly 240 may be reduced in an amount corresponding to the thickness 420 of the lower current collector 244b. Accordingly, a size of the electrode assembly may be increased, and thus the capacity of the secondary battery may be increased.

In one or more embodiments, a thickness of the insulator 330 may vary depending on a thickness of the current collector 244 and a thickness of the sub plate 242 or the configuration in which the cap assembly 230 and the sub plate assembly 240 are coupled together, and accordingly a height of a lower space extending from an upper surface of the insulator 330 to the upper surface of the lower current collector 244b may be adjusted as disclosed in the embodiments of the present disclosure.

In some embodiments, a lower surface of the body portion 242a of the sub plate 242 may contact an upper surface of the lower current collector 244b. In an embodiment in which the thickness 420 of the lower current collector 244b is smaller than the step 410 between the body portion 242a and the extension portion 242b of the sub plate 242, the lower current collector 244b and the welding beads 350 formed on the lower surface of the lower current collector 244b can be effectively prevented from coming into contact with the electrode assembly.

In some embodiments, the current collector may penetrate the sub plate, and thus the overall thickness of the cell upper structure can be reduced. Accordingly, the additional capacity increase and the cost reduction of the secondary battery can be achieved.

According to some embodiments, compared to the process of welding the sub plate after positioning the sub plate against the current collector in the related art, the number of welding operations can be reduced due to the increased fixing strength caused by the coupling of the current collector 244 and the sub plate 242. As a result, the manufacturing process can be simplified, the high structural stability can be achieved even with a small number of welding operations, and the manufacturing cost can be reduced.

According to some embodiments, even though the overall thickness of the cell upper structure is reduced compared to the thickness of the cell upper structure in the related art, because a sufficient thickness for welding can be achieved due to the structure in which the current collector 244 and the sub plate 242 are coupled, stable welding can be performed even without necessarily utilizing a welding jig.

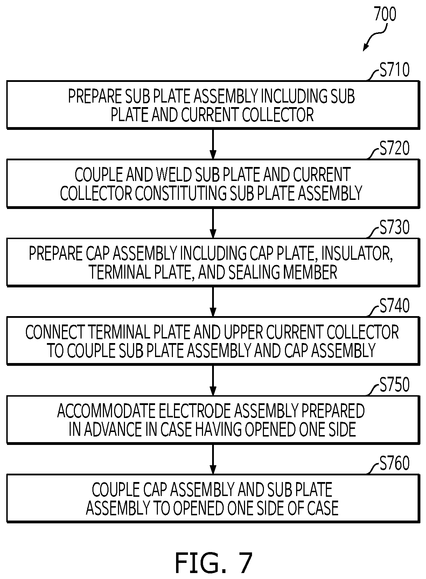

Fig. 7 is a flowchart illustrating tasks of a method for manufacturing a secondary battery according to some embodiments of the present disclosure. Referring to Fig. 7, first, the sub plate assembly 240 including the sub plate 242 and the current collector 244 is prepared (S710). The current collector 244 may include the lower current collector 244b and the upper current collector 244a protruding above the lower current collector 244b. Thereafter, the sub plate 242 and the current collector 244 of the sub plate assembly 240 may be coupled and then welded together (S720). In some embodiments, the sub plate 242 and the current collector 244 may be joined and then welded according to the shapes and methods disclosed in various embodiments of the present disclosure. In some embodiments, the sub plate 242 and the current collector may be welded by laser welding or the like. Subsequently, a cap assembly 230 including the cap plate 120, the insulator 330, the terminal plate 340, and the sealing member 320 is prepared (S730). Thereafter, the terminal plate 340 and the upper current collector 244a are connected to couple the sub plate assembly 240 and the cap assembly 230 (S740). Thereafter, the electrode assembly 210 prepared in advance is accommodated in the case 220 having one opening (S750), and the cap assembly 230 and the sub plate assembly 240 are coupled to one opening of the case 220 (S760). As a result, the secondary battery as disclosed in some embodiments is achieved.

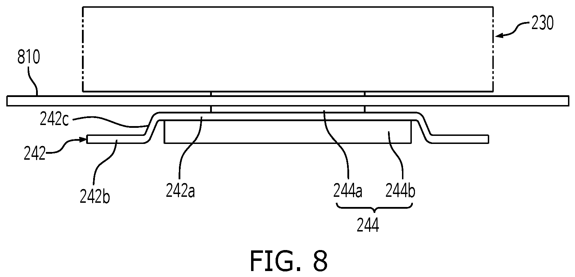

Fig. 8 is a sectional view schematically illustrating a procedure or process of welding the sub plate assembly 240 according to some embodiments of the present disclosure. Referring to Fig. 8, the sub plate assembly 240 including the sub plate 242 and the current collector 244 coupled to the sub plate 242 may be connected to the cap assembly 230. In some embodiments, after a welding jig may be inserted between the cap assembly 230 and the body portion 242a of the sub plate 242, the lower surface of the lower current collector part 244b may be welded, and thus it is possible to effectively prevent a laser beam from passing through the sub plate 242 when laser welding or the like is performed.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A sub plate assembly (240) comprising:
a sub plate (242) coupled to an electrode assembly (210); and
a current collector (244) and coupled to the sub plate (242),
wherein the current collector (244) comprises a lower current collector (244b) and an upper current collector (244a) protruding above the lower current collector (244b), and
wherein the upper current collector (244a) penetrates the sub plate (242) and couples the current collector (244) to the sub plate (242).

2. The sub plate assembly (240) according to claim 1, wherein the current collector (244) is coupled to a terminal plate (340).

3. The sub plate assembly (240) according to claim 1 or 2,
wherein the sub plate (242) comprises a body portion (242a), extension portions (242b) extending from both sides of the body portion (242a), and bent portions (242c) connecting the body portion (242a) and the extension portions (242b), and
wherein the body portion (242c) and the extension portion (242b) comprise a step (410), and wherein a lower surface of the body portion (242c) of the sub plate (242) contacts an upper surface of the lower current collector (244b).

4. The sub plate assembly (240) according to claim 3,
wherein a hole is provided in the body portion (242a) of the sub plate (242), and
wherein the upper current collector (244a) penetrates the hole.

5. The sub plate assembly (240) according to claim 3 or **4,**
wherein the sub plate (242) further comprises a pair of first coupling portions (245) on opposing sides of the body portion (242a),
wherein the lower current collector (244b) further comprises a pair of second coupling portions (246) at positions corresponding to the first coupling portions (245), and
wherein the pair of second coupling portions (246) of the lower current collector (244b) extend into the pair of first coupling portions (245) of the sub plate (242) and couple the sub plate (242) and the lower current collector (244b).

6. The sub plate assembly (240) according to claim 5, when dependent on claim 4, wherein the hole is between the pair of first coupling portions (245) in the body portion (242a) of the sub plate (242).

7. The sub plate assembly (240) according to any one of claims 3 to 6, wherein a thickness of the lower current collector (244b) is smaller than, equal to or substantially equal to a height of the step between the body portion (242a) and the extension portions (242b) of the sub plate (242).

8. The sub plate assembly (240) according to any preceding claim, further comprising welding beads (350) on a lower surface of the lower current collector (244b).

9. The sub plate assembly (240) according to claim 8, wherein the welding beads (350) are at positions corresponding to a circumference of the upper current collector (244a).

10. The sub plate assembly (240) according to claim 8, wherein the welding beads (350) are at positions corresponding to the second coupling portions (246) of the lower current collector (244b).

11. A secondary battery (10) comprising:
an electrode assembly (210);
a case (220) accommodating the electrode assembly (210), the case (220) comprising one opening;
the sub plate assembly (240) of any preceding claim; and
a cap assembly (230) coupled to the sub plate assembly (240) and coupled to the one opening of the case (220).

12. The secondary battery 10 according to claim 11, wherein the cap assembly (230) comprises:
a cap plate (310) coupled to the one opening of the case (220),
an insulator (330) on a lower surface of the cap plate (310),
a terminal plate (340) coupled to an upper surface of the cap plate (310), and
a sealing member (320) between the cap plate (310) and the terminal plate (340), and wherein the terminal plate (340) is connected to the upper current collector (244a).
